# EUROPEAN PATENT APPLICATION

(11) **EP 4 047 837 A1**
(43) Date of publication of application: **24.08.2022**
(21) Application number: 21207064.3
(22) Date of filing: 09.11.2021
(51) Int. Cl.: H04B 10/564, H04B 10/572, H04B 10/61, H04B 10/69, H04J 14/02

(54) **MULTI-SYSTEM OPTICAL COMMUNICATION SWITCHING MODULE AND THE METHOD THEREOF**

(30) Priority: 09.11.2020 TW 110104861
(71) Applicant: Ezconn Corporation, 251 New Taipei City (TW)
(72) Inventor: LAN, Chin yin, 251 New Taipei City (TW); CHOU, Yu te, 251 New Taipei City (TW)
(74) Representative: Keilitz Haines & Partner Patentanwälte PartGmbB

(57) **Abstract**

A multi-system optical communication switching module is disclosed. The multi-system optical communication switching module communicates with a communication system and controls a photoelectric converter through a plurality of optical transceiver signals. The multi-system optical communication switching module comprises a system storage unit and an optical communication control unit. The system storage unit includes system settings, the system storage unit selects one of the system settings according to the communication system and output the system storage data. The photoelectric signal processor generates a photoelectric conversion signal via receiving the control signal of the signal controller and the system storage data, and transmitting the photoelectric conversion signal to the photoelectric converter. When switching the system setting, the photoelectric conversion signal is generated to the photoelectric converter according to the system storage data, so that the setting can be adjusted to adapt to the communication system.

## Description

### RELATED APPLICATIONS

This application is a non-provisional of, claims the benefit and priority of, Taiwan (R.O.C) provisional Application No. 110104861, filed Nov. 9, 2020, which is incorporated herein by reference in its entirety.

### TECHNICAL FIELD

Example embodiments relate generally to the field of data communications and, more particularly, to a multi-system optical communication switching module and the method thereof.

### BACKGROUND

Driven by the ever-growing computing demands of cloud users, generation of massive amounts of data by edge computing devices such as Al-enabled loT devices, and roll-out of 5G networks, the architectures of hyperscale, colocation and on-premise data centers have been forced to rapidly evolve. Also, new data centers closer to end-users or devices are being built as the demand for services that rely on edge data centers increase.

For data centers, whether it is new builds or network upgrades, proper cabling infrastructure is required for successful application delivery within the data centers. The cabling infrastructure must be reliable, easy to install, modular and flexible, to accommodate changes, and scalable to support data center growth. In general, the cabling infrastructure connects the end and intermediate points of traffic patterns within the data centers to and from routers, interconnection switches, access switches, servers, SAN switches and storage. Of the types of cabling employed in data centers, coaxial cables continue to play an important role in different parts of the network infrastructure, such as short reach connections at the server, switch and top or rack layers.

Generally, Fiber To The x (FTTx) is a collective term used to describe network architecture. The "x" representing the fiber termination point. That is, the FTTx technology enables a terminal point to directly connect to the data center. The FTTx technology includes optical fiber deployments such as Fiber To The Curb (FTTC), Fiber To The Building (FTTB) and Fiber To The Home (FTTH). Generally, there are mainly two types of optical communication systems. The two systems are called Active Optical Networks (AON) and the Passive Optical Networks (PON). AONs use a point-to-point network architecture, and there is a dedicated optical fiber line between each end user and the data center. In other words, in the process of signal transmission, there are switching devices like routers and active optical devices on the way from the data center to the end user. That is, AONs use active, electrically powered devices to direct the signal to the relevant user. Compared with AONs, PONs use a point-to-multipoint network architecture. PON uses optical splitters, which require no electrical power, to send the signal to each user. Since the optical splitters have the characteristic of bidirectional transmission, one Optical Line Terminal (OLT) can broadcast the signals to multiple Optical network units (ONUs). In addition, PON has various technical standards such as ATM-PON, Ethernet-PON, Gigabit-PON, based on different transmission protocols.

In the AONs, users have a dedicated optical fiber network, which is relatively easy for network maintenance, capacity expansion, and network upgrades. However, the AONs mainly use active devices to transmit optical signals. On the other hand, the PONs use passive components that can process the signals without power consumption. Since that, the cost of the maintenance of the PONs is much lower than that of the AONs. Other than that, the PON system has much advantages such as saving the fiber optic cable resources, realizing bandwidth sharing, and having a fast network deployment.

Both AON system and PON system are widely used now. However, with the popularity of the PON system, users tend to transfer the system from AON to PON system. When it comes to transfer change the system, it will be costly both in time and money because the whole entity system network architecture will need to be rebuilt. So that, how to reduce either time or money consumption during the period of system transformation become a problem to be solved.

### SUMMARY

A multi-system optical communication switching module is provided. Via using the multi-system optical communication switching module of the present invention, there is no need to remove or install a new optical communication module and the follow elements for replacing a new communication system. The central office such as the telecom operator only have to change the current optical communication system by manually switching or judging the communication system under commands from users, the system settings will be replaced with the corresponding optical communication system.

A multi-system optical communication switching module is disclosed in the present invention. The multi-system optical communication switching module communicates with a communication system and controls a photoelectric converter through a plurality of optical transceiver signals. The multi-system optical communication switching module comprises a system storage unit and an optical transceiver driving unit. The system storage unit includes at least two system settings, each system setting has a plurality of system storage data, the system settings is switched according to at least the communication system and output the system storage data. The optical transceiver driving unit communicates with the system storage unit through the optical transceiver signals. The optical transceiver driving unit includes a photoelectric signal processor, generating a photoelectric conversion signal via receiving the system storage data, and transmitting the photoelectric conversion signal to the photoelectric converter, so that a photoelectric converter setting is adjusted to adapt to the communication system.

In some embodiments, the system storage unit selects the system setting through manual switching or automatic switching according to the communication system.

In some embodiments, the photoelectric signal processor includes a light source driver and/or a power amplifier.

In some embodiments, wherein the system settings are further switched according to the optical transceiver driving unit.

In some embodiments, wherein the system storage data of the system storage unit is further store in a memory, the memory is independent from the system storage unit.

In some embodiments, wherein the photoelectric signal processor is an optical signal transceiver.

In some embodiments, wherein the photoelectric conversion signal at least includes laser light power and light wavelength.

In some embodiments, wherein the optical transceiver signals are further transmitted through at least a fiber optic transceiver.

In some embodiments, wherein the system settings comprise a first system setting and a second system setting, the first system setting is for active optical network, the second system setting is for passive optical network.

In some embodiments, wherein the system settings comprise a first system setting and a second system setting, the first system setting is for active optical network, the second system setting is for gigabit capable passive optical network.

In some embodiments, wherein the system settings comprise a first system setting and a second system setting, the first system setting is for active optical network, the second system setting is for 10 gigabit capable passive network.

In some embodiments, wherein the photoelectric converter is an optical signal emission component.

In some embodiments, wherein the photoelectric converter is an optical signal receiving component.

A multi-system optical communication switching method, which a system storage unit stores at least two system settings and communicates with a communication system and controls a photoelectric converter through a plurality of optical transceiver signals, the steps comprising: communicating with the system storage unit through the optical transceiver signals; outputting a system storage data via the system storage unit; generating a photoelectric conversion signal via receiving the system storage data; and transmitting the photoelectric conversion signal to the photoelectric converter, so that a photoelectric converter setting is adjusted to adapt to the communication system.

In some embodiments, further comprising a step of switching the system setting according to the communication system before outputting the system storage data.

In some embodiments, further comprising a step of switching the system setting according to the photoelectric converter.

In some embodiments, wherein the system storage data of the system storage unit is further store in a memory, the memory is independent.

In some embodiments, wherein the optical transceiver signals are further transmitted through at least a fiber optic transceiver.

In some embodiments, wherein the system settings comprise a first system setting and a second system setting, the first system setting is for active optical network, the second system setting is for passive optical network.

In summary, in the multi-system optical communication switching module disclosed in the present invention, the system storage unit is used to store the settings in the optical communication module, and there is no need to re-assemble the components and circuits corresponding to the system. By using this module, not only simplifies the complexity of replacing the optical system, but also makes the system replacement process more efficient, and through the scalability of the system settings, a variety of optical communication systems can be supported in real time.

### BRIEF DESCRIPTION OF THE DRAWINGS

Unless specified otherwise, the accompanying drawings illustrate aspects of the innovative subject matter described herein. Referring to the drawings, wherein like reference numerals indicate similar parts throughout the several views, several examples of heatsink fins incorporating aspects of the presently disclosed principles are illustrated by way of example, and not by way of limitation.
Fig. 1 is a diagram of an embodiment of the optical communication module with multi-system switching in the present invention.
Fig. 2 is a diagram of an another embodiment of the optical communication module with multi-system switching in the present invention.
Fig. 3 is a flow chart of an embodiment of the optical communication module with multi-system switching method in the present invention.
Fig. 4 is a flow chart of an embodiment of the optical communication module with multi-system switching method in the present invention.

### DETAILED DESCRIPTION

The following describes various principles related to communication systems by way of reference to specific examples. More particularly, but not exclusively, such innovative principles are described in relation to selected examples of communication systems switching modules and well-known functions or constructions are described in detail for purposes of succinctness and clarity. Nonetheless, one or more of the disclosed principles can be incorporated in various other embodiments of multi-system optical communication switching module to achieve any of a variety of desired outcomes, characteristics, and/or performance criteria.

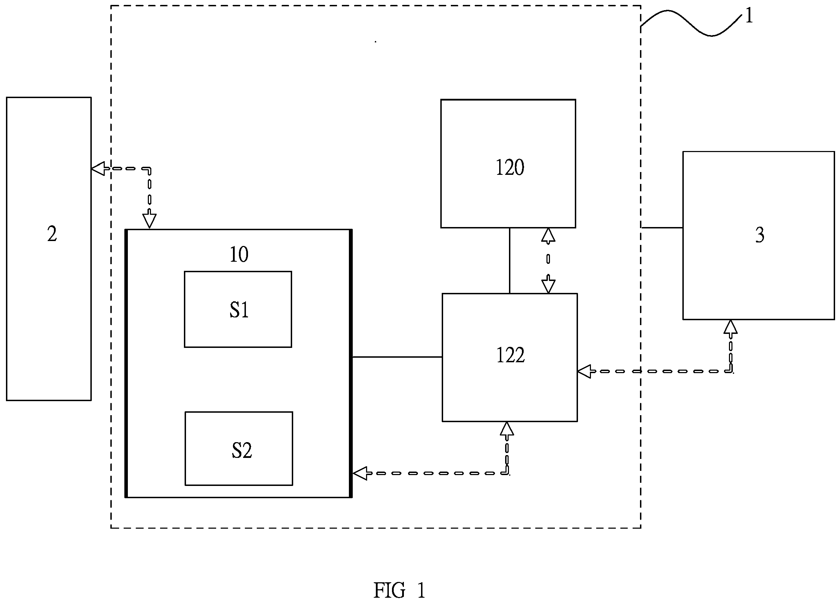

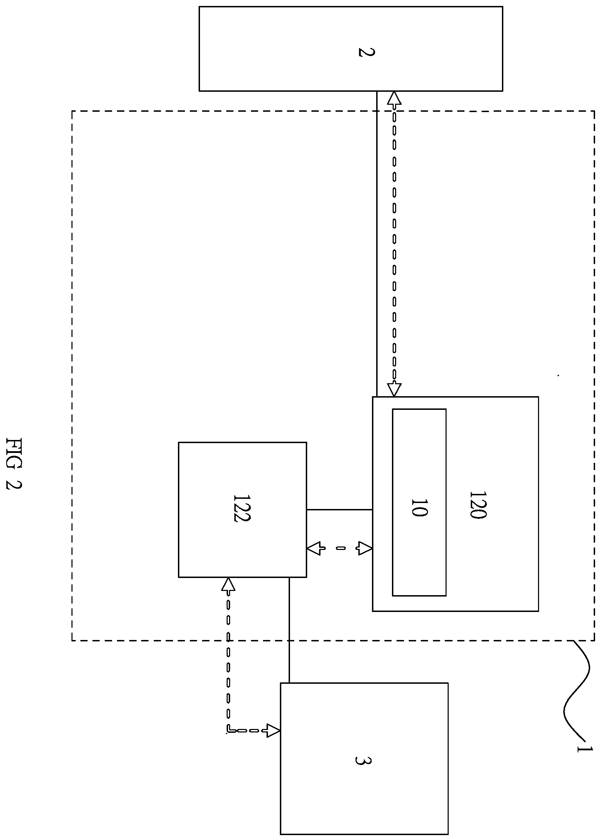

Fig. 1 is a diagram of an embodiment of the optical communication module with multi-system switching in the present invention. Fig. 2 is a diagram of an another embodiment of the optical communication module with multi-system switching in the present invention.

Referring to Fig 1, the multi-system optical communication switching module 1 disclosed in the present invention applies between a communication system 2 and a photoelectric converter 3. The multi-system optical communication switching module 1 communicates with the communication system 2 through optical transceiver signals so as to control the photoelectric converter 3. The multi-system optical communication switching module 1 comprises a system storage unit 10 and an optical transceiver driving unit 120. The system storage unit 10 includes individual system settings S1, S2, each system setting stores corresponding system storage data. The optical transceiver driving unit 120 is connected with a photoelectric signal processor 122.

It should be noted that even there are only two system settings shown in the figure, the number of system settings can be added or deleted at any time according to requirements in practical applications. Similarly, the system storage data corresponding to the system setting is also changed according to the number of system settings.

The signal transmission and control between modules will be described herein. The signal transmission is shown by the dotted line in the figure. The system storage unit 10 switches one of the system settings S1 or S2 according to the communication system 2, and outputs the system storage data corresponding to the system settings. Also, optical transceiver driving unit 120 could generate a control signal. Then, the photoelectric signal processor 122 receives the control signal generated by the signal controller 120 and generates the photoelectric conversion signal according to the system storage data of the system storage unit 10. Finally, the photoelectric converter 3 adjusts the settings of the photoelectric signal according to the photoelectric conversion signal and system settings.

In addition, the system storage unit can select the system settings by manually switching or automatically switching the communication system. In other words, after confirming the current optical fiber network system, the communication system end can be manually switched to the corresponding system setting. Alternatively, the communication system end can automatically communicate with the optical fiber network system, and the system storage unit can automatically switch to the corresponding system setting via signal transmission.

Referring to FIG.2, the multi-system optical communication switching module 1 disclosed in the present invention applies between a communication system 2 and a photoelectric converter 3. The multi-system optical communication switching module 1 communicates with the communication system 2 through optical transceiver signals so as to control the photoelectric converter 3. The multi-system optical communication switching module 1 comprises a system storage unit 10 and an optical transceiver driving unit 120. The system storage unit 10 includes system settings S1, S2, each system setting stores corresponding system storage data. To be noticed, the system storage unit 10 here is integrated in the optical transceiver driving unit 120. In the view of signal controlling, after the communication system 2 sends the transceiver signals, the transceiver signals are received by the optical transceiver driving unit 120. The optical transceiver driving unit 120 then directly switches the system settings in the system storage unit 10.

In some embodiments, the system storage data of the system storage unit is further store in a memory (not shown in FIG.2), the memory is independent or integrated in the system storage unit.

In some embodiments, the system setting of the system storage unit and the communication system is selected from Active Optical Networks (AON) and Passive Optical Networks (PON). For example, passive optical networks systems include Asynchronous Transfer Mode-based Passive Optical (ATM PON), Broadband PON(BPON), Gigabit Capable PON (GPON) and 10 Gigabit Capable PON(XG-PON), etc. However, the types of optical network systems are not limited in the present invention, any optical fiber network system that suits the standard technology today should not be excluded in the present invention.

In some embodiments, the photoelectric signal processor includes a light source driver and/or a power amplifier. For example, the light source driver can be a laser diode driver.

In some embodiments, the signal controller is selected from burst-mode controller, continuous-mode controller and the combination thereof.

In some embodiments, the photoelectric signal processor is an optical transceiver. For example, the photoelectric signal processor can be Transmitter Optical Sub Assembly(TOSA), Receiver Optical Sub Assembly (ROSA) and Bi-Directional Optical Sub Assembly(BOSA). However, the types of the photoelectric signal processor are not limited in the present invention, any the photoelectric signal processor that suits the standard technology today should not be excluded in the present invention.

In some embodiments, the photoelectric conversion signal at least includes laser light power and light wavelength.

In some embodiments, the optical transceiver signals can further transmit through at least a fiber optic transceiver. In other words, the fiber optic transceiver can be arranged between the communication system and the optical communication control unit. The fiber optic transceivers may improve the efficiency of communication of the communication system and the optical communication control unit. The fiber optic transceiver is independent or integrated in one of the communication system or the optical communication control unit.

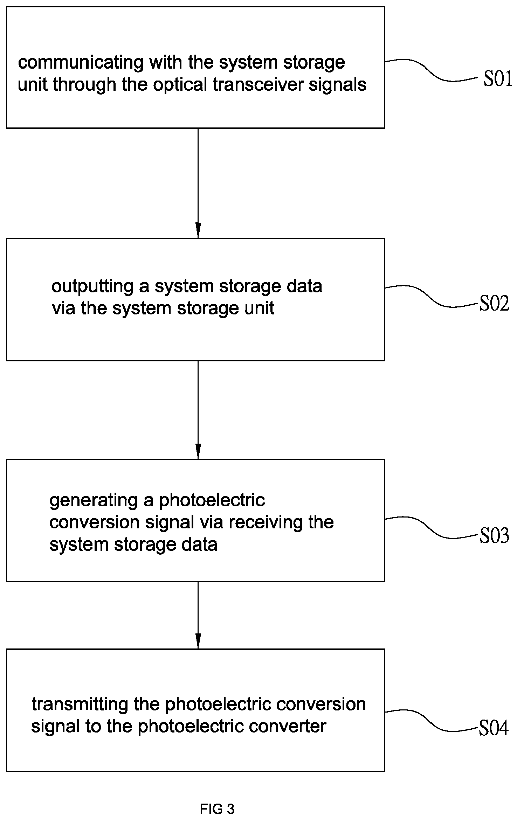

Referring to Fig.3, a flow chart of an embodiment of the optical communication module with multi-system switching method in the present invention. A multi-system optical communication switching method comprises the following steps. First, S01, communicating with the system storage unit through the optical transceiver signals. Then, S02, outputting a system storage data via the system storage unit. And, S03, generating a photoelectric conversion signal via receiving the system storage data. Finally, S04, transmitting the photoelectric conversion signal to the photoelectric converter, so that a photoelectric converter setting is adjusted to adapt to the communication system.

In some embodiments, further comprising a step of switching the system setting according to the communication system before outputting the system storage data.

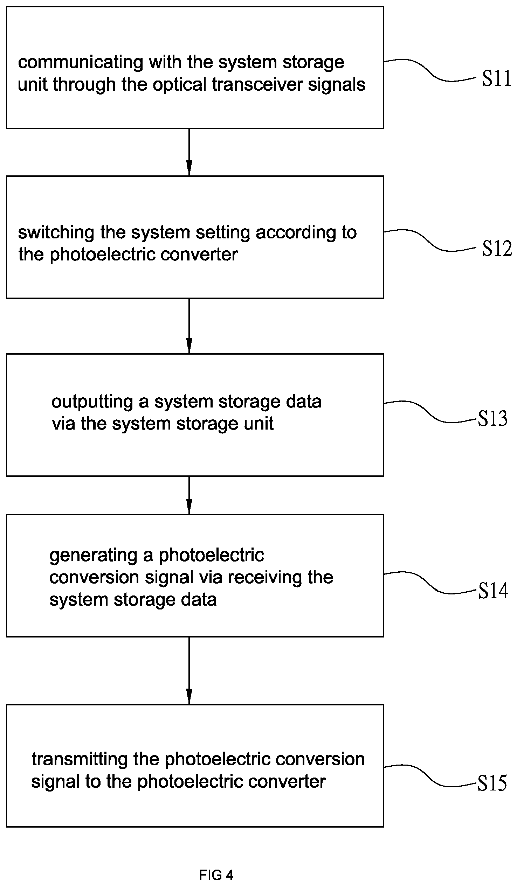

In some embodiments, further comprising a step of switching the system setting according to the photoelectric converter. That is, please referring to Fig.4, which shows flow chart of an embodiment of the optical communication module with multi-system switching method in the present invention. First, S11, communicating with the system storage unit through the optical transceiver signals. Then, S12, switching the system setting according to the photoelectric converter. After that, S13, outputting a system storage data via the system storage unit. And, S14, generating a photoelectric conversion signal via receiving the system storage data. Finally, S15, transmitting the photoelectric conversion signal to the photoelectric converter, so that a photoelectric converter setting is adjusted to adapt to the communication system.

In some embodiments, wherein the system storage data of the system storage unit is further store in a memory, the memory is independent.

In some embodiments, wherein the optical transceiver signals are further transmitted through at least a fiber optic transceiver.

In some embodiments, wherein the system settings comprise a first system setting and a second system setting, the first system setting is for active optical network, the second system setting is for passive optical network.

That is, a multi-system optical communication switching module is disclosed in the present invention. The system storage datas are stored in the system settings to correspond to different communication system. When switching the system setting, the photoelectric conversion signal is generated to the photoelectric converter according to the system storage data, so that the setting can be adjusted to adapt to the communication system. The following will further explain with practical applications. When a terminal user wants to upgrade or change the optical fiber network system, the users only have to inform the central office such as a telecommunications operator. Then, the telecom operators can manually determine the communication system or automatically select the corresponding system settings for the new optical communication system. For example, the active optical fiber network system signal can be simply adjusted to the passive optical fiber network system via adjusting the system setting without building a whole new entity optical signal lines for the passive optical fiber network system. Based on the above, the multi-system optical communication switching module of this creation has the following advantages.
1. The system storage unit integrates the multiple system storage data into the optical communication module. When the terminal user wants to change the current optical communication system, there is no need to replace or install additional optical signal transceivers.
2. The system settings are expandable, system settings can be updated or replaced any time according to the development and evolution of optical fiber network technology.
3. When it comes to switching the communication system, the system settings can be manually or automatically changed according to the communication system. Not only lower money of processing for re-fitting, also increase the speed of switching the optical communication system.

The presently disclosed inventive concepts are not intended to be limited to the embodiments shown herein, but are to be accorded their full scope consistent with the principles underlying the disclosed concepts herein. Directions and references to an element, such as "up," "down,", "upper," "lower," "horizontal," "vertical," "left," "right," and the like, do not imply absolute relationships, positions, and/or orientations. Terms of an element, such as "first" and "second" are not literal, but, distinguishing terms. As used herein, terms "comprises" or "comprising" encompass the notions of "including" and "having" and specify the presence of elements, operations, and/or groups or combinations thereof and do not imply preclusion of the presence or addition of one or more other elements, operations and/or groups or combinations thereof. Sequence of operations do not imply absoluteness unless specifically so stated. Reference to an element in the singular, such as by use of the article "a" or "an", is not intended to mean "one and only one" unless specifically so stated, but rather "one or more". As used herein, "and/or" means "and" or "or", as well as "and" and "or." As used herein, ranges and subranges mean all ranges including whole and/or fractional values therein and language which defines or modifies ranges and subranges, such as "at least," "greater than," "less than," "no more than," and the like, mean subranges and/or an upper or lower limit. All structural and functional equivalents to the elements of the various embodiments described throughout the disclosure that are known or later come to be known to those of ordinary skill in the relevant art are intended to be encompassed by the features described and claimed herein. Moreover, nothing disclosed herein is intended to be dedicated to the public regardless of whether such disclosure may ultimately explicitly be recited in the claims. No element or concept disclosed herein or hereafter presented shall be construed under the provisions of 35 USC 112(f) unless the element or concept is expressly recited using the phrase "means for" or "step for".

In view of the many possible embodiments to which the disclosed principles can be applied, we reserve the right to claim any and all combinations of features and acts described herein, including the right to claim all that comes within the scope and spirit of the foregoing description, as well as the combinations recited, literally and equivalently, in the following claims and any claims presented anytime throughout prosecution of this application or any application claiming benefit of or priority from this application.

## Claims

**1.** A multi-system optical communication switching module, which communicates with a communication system and controls a photoelectric converter through a plurality of optical transceiver signals, the multi-system optical communication switching module comprising:
a system storage unit, including at least two system settings, each system setting has a plurality of system storage data, the system settings is switched according to at least the communication system and output the system storage data;
an optical transceiver driving unit, communicating with the system storage unit through the optical transceiver signals; and
a photoelectric signal processor, generating a photoelectric conversion signal via receiving the system storage data, and transmitting the photoelectric conversion signal to the photoelectric converter, so that a photoelectric converter setting is adjusted to adapt to the communication system.

**2.** The multi-system optical communication switching module of claim 1, wherein the system storage unit selects the system setting through manual switching or automatic switching according to the communication system.

**3.** The multi-system optical communication switching module of claim 1, wherein the system storage unit is further combined in the optical transceiver driving unit.

**4.** The multi-system optical communication switching module of claim 1, wherein the system settings are further switched according to the optical transceiver driving unit.

**5.** The multi-system optical communication switching module of claim 1, wherein the system storage data of the system storage unit is further store in a memory, the memory is independent from the system storage unit.

**6.** The multi-system optical communication switching module of claim 1, wherein the photoelectric signal processor is an optical signal transceiver.

**7.** The multi-system optical communication switching module of claim 1, wherein the photoelectric conversion signal at least includes laser light power and light wavelength.

**8.** The multi-system optical communication switching module of claim 1, wherein the optical transceiver signals are further transmitted through at least a fiber optic transceiver.

**9.** The multi-system optical communication switching module of claim 1, wherein the system settings comprise a first system setting and a second system setting, the first system setting is for active optical network, the second system setting is for passive optical network.

**10.** The multi-system optical communication switching module of claim 1, wherein the system settings comprise a first system setting and a second system setting, the first system setting is for active optical network, the second system setting is for gigabit capable passive optical network.

**11.** The multi-system optical communication switching module of claim 1, wherein the system settings comprise a first system setting and a second system setting, the first system setting is for active optical network, the second system setting is for 10 gigabit capable passive network.

**12.** The multi-system optical communication switching module of claim 1, wherein the photoelectric converter is an optical signal emission component.

**13.** The multi-system optical communication switching module of claim 1, wherein the photoelectric converter is an optical signal receiving component.

**14.** A multi-system optical communication switching method, which a system storage unit stores at least two system settings and communicates with a communication system and controls a photoelectric converter through a plurality of optical transceiver signals, the steps comprising:
communicating with the system storage unit through the optical transceiver signals;
outputting a system storage data via the system storage unit;
generating a photoelectric conversion signal via receiving the system storage data; and
transmitting the photoelectric conversion signal to the photoelectric converter, so that a photoelectric converter setting is adjusted to adapt to the communication system.

**15.** A multi-system optical communication switching method of claim 14, further comprising a step of switching the system setting according to the communication system before outputting the system storage data.

**16.** The multi-system optical communication switching method of claim 14, further comprising a step of switching the system setting according to the photoelectric converter.

**18.** A multi-system optical communication switching method of claim 14, wherein the system storage data of the system storage unit is further store in a memory, the memory is independent.

**19.** A multi-system optical communication switching method of claim 14, wherein the optical transceiver signals are further transmitted through at least a fiber optic transceiver.

**20.** A multi-system optical communication switching method of claim 14, wherein the system settings comprise a first system setting and a second system setting, the first system setting is for active optical network, the second system setting is for passive optical network.
